# EUROPÄISCHE PATENTSCHRIFT

(11) **EP 0 778 315 B1**
(45) Veröffentlichungstag und Bekanntmachung des Hinweises auf die Patenterteilung: **01.03.2000**
(21) Anmeldenummer: 96119132.7
(22) Anmeldetag: 29.11.1996
(51) Int. Cl.: C08L 31/02, C09J 131/02, C04B 24/26, C08J 3/14

(54) **Redispergierbares Dispersionspulver**
Redispersable dispersion powder
Poudre de dispersion redispersible

(30) Priorität: 07.12.1995 DE 19545608
(43) Veröffentlichungstag der Anmeldung: 11.06.1997
(73) Patentinhaber: Clariant GmbH, 65929 Frankfurt am Main (DE)
(72) Erfinder: Jakob, Martin, Dr., 65779 Kelkheim (DE); Matz, Volker, Dr., 60529 Frankfurt (DE); Schindler, Hermann, Dr., 65817 Eppstein (DE)

(56) Entgegenhaltungen:
- EP-A- 0 686 682
- DE-U- 29 508 505
- US-A- 4 695 606

## Beschreibung

Die vorliegende Erfindung betrifft Schutzkolloid-stabilisierte Dispersionspulver, Verfahren zu deren Herstellung und zur Herstellung stabiler Redispersionen aus diesen Dispersionspulvern sowie deren Verwendung in Klebstoffen.

Dispersionspulver insbesondere aus homo- und copolymerem Polyvinylacetat, die mit Schutzkolloiden wie Polyvinylalkohol stabilisiert sind, werden seit vielen Jahren als Bestandteil zur Herstellung von Klebstoffzusammensetzungen, beispielsweise Fliesenkleber oder Tapetenkleister, herangezogen. Üblicherweise werden Dispersionspulver durch Sprühtrocknung von wäßrigen Polymerdispersionen meistens unter Zusatz von Hilfsmitteln wie Antibackmittel und nachträglich zugegebenem Polyvinylalkohol hergestellt. Redispersionen von Dispersionspulvern, die überwiegend aus Polyvinylestern, insbesondere Polyvinylacetat, bestehen und mit Schutzkolloiden, insbesondere Polyvinylalkohol, stabilisiert sind, eignen sich auch als Weißleime zum Kleben von Holz und anderen porösen Materialien. Die mit den Redispersionen erhaltenen Klebverbindungen sind üblicherweise in ihren Trockenbindefestigkeiten denen aus herkömmlichen Dispersionsklebstoffen vergleichbaren Aufbaus hergestellten Klebverbindungen gleichwertig.

Allgemein werden Dispersionen von Polyvinylestern, insbesondere von Polyvinylacetat, die als Weißleime zum Verleimen von Holz und anderen porösen Substraten verwendet werden, umfangreich in der Patentliteratur oder Fachmonographien beschrieben, beispielsweise in Handbook of Adhesives, 3. Auflage, Kapitel 21, Seite 381. Ein grundsätzlicher Mangel der oben erwähnten Klebstoffe, sei es als Dispersionsklebstoff oder Redispersion eines Dispersionspulvers, ist die auf der Anwesenheit hydrophiler Stabilisierungsmittel, insbesondere Polyvinylalkohol, beruhende Anfälligkeit der Klebverbindungen gegenüber Wasser, so daß mit solchen Systemen in der Regel keine normgerechten wasserfesten Verklebungen durchgeführt werden können.

Zur Verbesserung der Wasserfestigkeit von Dispersionspulver-Zusammensetzungen schlägt DE-A 44 02 408 die Verwendung von Silicium-enthaltenden Comonomeren bei der Emulsionspolymerisation der zu versprühenden Dispersion vor. DE-A 44 02 409 beschreibt die Zugabe von Siliciumverbindungen in Form einer Emulsion zu der Dispersion vor der Sprühtrocknung. Redispergierbare Dispersionspulver mit erhöhter Wasserbeständigkeit erhält man nach JP-A 157 565/95 durch Verwendung von acetoacetylierten Polyvinylalkoholen als Schutzkolloid bei der Herstellung der Dispersion. Pulverförmige Mischungen aus Melaminharzen mit Dispersionspulvern aus Vinylacetat/Ethylen-Copolymeren sind nach JP-A 179 278/86 als Holzklebstoffe mit erhöhter Wasserresistenz verwendbar.

Die Patentliteratur nennt darüber hinaus Methoden zur Verbesserung der Wasserfestigkeit von Polyvinylesterdispersionen. Beispielsweise können durch Einpolymerisation von vernetzbaren Comonomeren wie N-Methylol(meth)acrylamid (DE-C 26 20 738) oder nachträglich zugegebenen Vernetzungsmitteln wie For maldehydharzen (DE-B 22 61 402) oder Isocyanatverbindungen (EP-A 206 059) erhöhte Wasserresistenzen erzielt werden. Die Herstellung von Dispersionspulvern aus diesen Systemen führt allerdings wegen der hohen Reaktivität der Vernetzungsmittel in der Regel zu unbefriedigenden Ergebnissen.

Die nicht vorveröffentlichte DE-A 44 20 484 schlägt Dispersionsklebstoffe mit erhöhter Wasserresistenz ihrer Verfilmungen und praxisnaher Topfzeit vor, enthaltend einen homo- oder copolymeren Polyvinylester, polymere Schutzkolloide, mit den polymeren Schutzkolloiden komplexierbare wasserlösliche Verbindungen und zumindest teilweise maskierte Polyaldehyde, aus denen in wäßrig saurem Medium Aldehydgruppen kontrolliert freisetzbar sind.

Pulverförmige Klebstoffzusammensetzungen, deren verfilmte, vom Endverbraucher durch Anrühren mit Wasser hergestellte Redispersionen in Bezug auf die Wasserbeständigkeit den in den obengenannten Schriften beschriebenen Klebstoffdispersionssystemen gleichwertig sind, bieten bei vergleichbarem anwendungstechnischen Eigenschaftsprofil weitere Vorteile, beispielsweise niedrigere Transportgewichte sowie eine leichtere Entsorgung von Gebinden.

Aufgabe der vorliegenden Erfindung war es demnach, ein redispergierbares Dispersionspulver bereitzustellen, mit deren Redispersionen als Klebstoff Klebverbindungen herzustellen sind, die über eine hohe Wasserfestigkeit verfügen und die beispielsweise die Erfüllung von Prüfnormen für wasserresistente Klebstoffe, beispielsweise die der DIN EN 204, gestatten.

Es wurde nun gefunden, daß diese Aufgabe im wesentlichen durch eine pulverförmige Zusammensetzung gelöst werden kann, die aus einem Polyvinylester-Basispolymerisat in Kombination mit einer oder mehreren mindestens teilweise maskierten wenigstens bifunktionellen wasserlöslichen Aldehydverbindungen, die in der Redispersion in saurem Medium kontrolliert Aldehydgruppen freisetzen, sowie säurespendenden Verbindungen besteht.

Gegenstand dieser Erfindung ist ein redispergierbares Dispersionspulver, enthaltend
a) ein Basispolymerisat aus der Gruppe der Vinylester-Homo- und Copolymerisate,
b) 2 bis 20 Gew.-%, bezogen auf die Gesamtmasse des Basispolymerisats a), Polyvinylalkohol mit einem Hydrolysegrad von 70 bis 100 Mol-% und einer Viskosität der 4%igen wäßrigen Lösung von 2 bis 70 mPa·s,
c) 0 bis 50 Gew.-%, bezogen auf die Gesamtmasse der Polymeranteile a) und b), Antibackmittel,
d) 0,001 bis 5 Gew.-%, bezogen auf die Gesamtmasse der Polymeranteile a) und b), wasserlösliche, mindestens bifunktionelle, maskierte Aldehyde mit wenigstens 3 Kohlenstoffatomen, aus denen im sauren Medium Aldehydgruppen kontrolliert freisetzbar sind,
e) 0 bis 25 Gew.-%, bezogen auf die Gesamtmasse des Basispolymerisats a), weitere Additive aus der Gruppe der Filmbildehilfsmittel und Weichmacher,
f) 0 bis 10 Gew.-%, bezogen auf die Gesamtmasse der Polymeranteile a) und b), in Festsubstanz vorliegende oder auf einem Trägermaterial adsorbierte freie Brönsted- oder Lewis-Säuren.

Als Basispolymerisat a) eignen sich vorzugsweise Homo- oder Copolymere mit einem Vinylester-Anteil von mindestens 50 Gew.-%. Als Vinylester geeignet sind beispielsweise Vinylformiat, Vinylacetat, Vinylpropionat, Vinylisobutyrat, Vinylpivalat, Vinyl-2-ethylhexanoat, Vinylester von gesättigten verzweigten Monocarbonsäuren mit 9 bis 10 Kohlenstoffatomen im Säurerest, Vinylester von längerkettigen gesättigten oder ungesättigten Fettsäuren wie beispielsweise Vinyllaurat, Vinylstearat. Unter diesen ist die ausschließliche Verwendung von Vinylacetat zur Bildung eines Homopolymerisats besonders bevorzugt. Monomere, die mit den Vinylestern copolymerisiert werden können, sind insbesondere Ethylen, weiterhin α,β-ungesättigte Carbonsäuren, beispielsweise Acrylsäure, Methacrylsäure, sowie deren Ester mit primären und sekundären gesättigten einwertigen Alkoholen mit 1 bis 18 Kohlenstoffatomen, beispielsweise Methanol, Ethanol, Propanol, Butanol, 2-Ethylhexylalkohol, cycloaliphatischen Alkoholen sowie längerkettigen Fettalkoholen. Weiterhin können α,β-ungesättigte Dicarbonsäuren, beispielsweise Maleinsäure, Fumarsäure, Itaconsäure oder Citraconsäure, sowie deren Mono- oder Diester mit gesättigten einwertigen aliphatischen Alkoholen mit 1 bis 18 Kohlenstoffatomen mitverwendet werden. Weiterhin geeignet als Basispolymeri sat sind durch Mischung von Dispersionen unterschiedlicher Polyvinylesterzusammensetzungen hergestellte heterogene Polyvinylester-Polymerisate, wie in DE-A 44 31 343 beschrieben. Vorzugsweise werden homopolymere Polyvinylester, insbesondere Polyvinylacetat oder Vinylacetat-Ethylen-Copolymere mit einem Ethylenanteil von 2 bis 50 Gew.-%, oder Mischungen aus diesen Polymerisaten eingesetzt.

Als Komponente b) eignen sich Polyvinylalkohole mit einem Hydrolysegrad von 70 bis 100 Mol-% und einer Viskosität der 4%igen wäßrigen Lösung von 2 bis 70 mPa·s. Vorzugsweise werden Polyvinylalkohole mit einem Hydrolysegrad von 80 bis 94 Mol-% und einer Viskosität der 4%igen wäßrigen Lösung von 2 bis 30 mPa·s verwendet. Ihre Menge beträgt 2 bis 20 Gew.-%, bezogen auf die Gesamtmasse des Basispolymerisats a).

Geeignete Antibackmittel c) sind üblicherweise Aluminiumsilikate, Kieselgur, kolloidales Silicagel, pyrogen erzeugtes Siliziumdioxid, Kaolin, Tone, Leichtspat, Magnesiumhydrosilikate, Talkum, Zemente, Diatomeenerde, Fällungskieselsäuren, hydrophob modifizierte Kieselsäuren oder hydrophob modifiziertes Siliziumdioxid gemäß DE-C 31 01 313. Die mittleren Teilchengrößen der Antibackmittel betragen 0,01 bis 50 µm, insbesondere 0,01 bis 15 µm. Ihre Einsatzmenge beträgt, bezogen auf die Gesamtmasse der Polymeranteile a) und b), 0 bis 30 Gew.-%.

Als Komponente d) werden vorzugsweise 0,1 bis 1,5 Gew.-%, besonders bevorzugt 0,1 bis 0,5 Gew.-%, bezogen auf die Gesamtmasse der Polymeranteile a) und b), zu mindestens 0,001 Gew.-% wasserlösliche, wenigstens bifunktionelle, maskierte Aldehyde mit wenigstens 3 Kohlenstoffatomen eingesetzt, aus denen im sauren Medium zur Vernetzung befähigte Aldehydgruppen kontrolliert freisetzbar sind. Es eignen sich beispielsweise Derivate von Malonaldehyd, Succinaldehyd, 2-Hydroxysuccinaldehyd, Glutaraldehyd, 3-Methylglutaraldehyd, 3-Hydroxyglutaraldehyd, Adipaldehyd, Heptandial, Octandial, Nonandial, Decandial sowie cis- und trans-2-Butendial oder Polyacrolein sowie Dialdehydstärken. Geeignete Derivate dieser Aldehyde sind deren vollständige oder partiell gebildete Addukte mit Alkalihydrogensulfiten, deren Vollacetale mit Methanol oder Ethanol und deren cyclische Vollacetale mit Ethylenglykol oder Propylenglykol, wobei die Acetale weitere nicht maskierte Aldehydgruppen tragen können. Geeignet sind ebenfalls die intramolekularen cyclischen Acetale des Succindialdehyds und Glutardialdehyds wie 2,5-Dialkoxytetrahydrofuran und 2,6-Dialkoxytetrahydro-2H-pyran. Die Bisaddukte des Natrium- oder Kaliumhydrogensulfits an diese Aldehyde sind bevorzugt. Besonders bevorzugte Komponenten sind die pulverförmigen Bisaddukte von Natrium- oder Kaliumhydrogensulfit an Glutaraldehyd und Succinaldehyd, insbesondere Glutaraldehydbis(natriumhydrogensulfit) und Succinaldehydbis(natriumhydrogensulfit). Es können natürlich auch Gemische verschiedener Addukte eingesetzt werden. Bevorzugte Verbindungen sind ferner die Bisdimethyl- und Bisdiethylacetale des Malondialdehyds und die intramolekularen cyclischen Acetale des Succinaldehyds und Glutaraldehyds.

Als Komponente e) werden gegebenenfalls bevorzugt 0,1 bis 5 Gew.-%, bezogen auf die Gesamtmasse des Basispolymerisats a), weitere Additive wie Filmbildehilfsmittel, beispielsweise Butyldiglykolacetat, Weichmacher, Entschäumer sowie gegebenenfalls weitere Zusatzstoffe verwendet.

Die erfindungsgemäßen Dispersionspulver enthalten als acide Komponente f) vorzugsweise 0,1 bis 5 Gew.-%, bezogen auf die Gesamtmasse der Polymeranteile a) und b), in fester Form vorliegende oder auf einem Trägermaterial, beispielsweise Alumosilikaten, adsorbierte wasserlösliche Brönsted- oder Lewis-Säuren. Es werden vorzugsweise Verbindungen verwendet, die im weitesten Sinn mit dem Polyvinylalkohol Komplexverbindungen eingehen können. Als Brönsted-Säuren werden vorzugsweise solche verwendet, die zur Bildung von Polyanionen befähigt sind, beispielsweise Borsäure, meta-Phosphorsäure oder acide kristalline Salze der ortho-Phosphorsäure. Als Lewis-Säuren finden kristalline Salze mit mehrwertigen Kationen Verwendung, insbesondere Salze des Al(lll), Zr(IV) oder Fe(III), beispielsweise Aluminiumchlorid, Aluminiumnitrat, Zirkonoxychlorid oder Eisen(III)chlorid. Weitere Brönstedt-Säuren mit pK_{S}-Werten unter 2,5, beispielsweise Benzolsulfonsäure oder p-Toluolsulfonsäure, können mit den vorgenannten Säuren falls nötig zur Einstellung eines niedrigen pH-Wertes mitverwendet werden. Es können selbstverständlich Gemische der vorgenannten Verbindungen eingesetzt werden.

Weiterer Gegenstand der Erfindung ist ein Verfahren zur Herstellung von redispergierbaren Dispersionspulvern nach Anspruch 1, ausgehend von einer das Basispolymerisat a) enthaltenden Dispersion, die bereits mit einem Teil des einzusetzenden Polyvinylalkohols b) stabilisiert sein kann und versetzt wird mit der Restmenge des einzusetzenden Polyvinylalkohols b) und gegebenenfalls versetzt wird mit einer oder mehreren Komponenten e), durch Trocknen unter optionalem Zusatz von Antibackmittel c) und anschließende Zugabe der maskierten Polyaldehyde d) und gegebenenfalls der Säure f).

Bei der Herstellung der erfindungsgemäßen Dispersionspulver für wasserfeste Klebstoffe wird von einer das Polyvinylester-Basispolymerisat a) enthaltenden Dispersion ausgegangen, die bereits mit einem Teil oder der vollständigen Menge des verwendeten Polyvinylalkohols b) stabilisiert sein kann. Dieser kann der Dispersion auch nachträglich vorzugsweise in Form einer wäßrigen Lösung zugegeben werden. Die Dispersion wird gegebenenfalls mit einer oder mehreren Komponenten der Gruppe e), insbesondere im Falle der Verwendung einer reinen Polyvinylacetat-Homopolymerdispersion, mit gängigen Filmbildehilfsmitteln zur Senkung der MFT (minimalen Filmbildetemperatur), versetzt. Die Reihenfolge der Mischprozesse ist hierbei nicht kritisch.

Die Dispersionsmischung wird anschließend getrocknet, vorzugsweise sprüh- oder gefriergetrocknet, insbesondere sprühgetrocknet. Insbesondere bei einer sehr niedrigen minimalen Filmbildetemperatur der Dispersionsmischungen, beispielsweise von ≤ 0 °C, sollten bei der Sprühtrocknung zur Gewährleistung einer geeigneten Lagerstabilität der Dispersionspulver Antibackmittel c) mitverwendet werden. Das Antibackmittel wird gleichzeitig, aber getrennt von der wäßrigen Dispersionsmischung in den Sprühtrocknungsturm mit eingegeben. Aus den wäßrigen Mischungen der beiden Kunststoffdispersionen werden die erfindungsgemäß angestrebten Dispersionspulver durch Sprühtrocknung hergestellt. Dabei wird die Sprühtrocknung in beliebigen zur Sprühtrocknung von Flüssigkeiten geeigneten und dem Fachmann bekannten Vorrichtungen, beispielsweise solchen mit Zweistoffdüsen oder mit einer rotierenden Zerstäuberscheibe, durchgeführt. Die Temperatur des Trockengases beträgt hierbei 60 ° C bis 180 °C, vorzugsweise 90°C bis 150 °C.

Zur vorzugsweise sprühgetrockneten Dispersionsmischung werden anschließend die maskierten Polyaldehyde d) und gegebenenfalls die aciden Komponenten f) entweder nacheinander oder gleichzeitig zugemischt. Der Mischvorgang kann in den zu diesem Zweck gängigen und dem Fachmann bekannten Mischgeräten, beispielsweise Trommel-, Taumel- oder Rührmischern, vorgenommen werden. Die Reihenfolge der Zugabe der Komponenten d) und f) ist hierbei unerheblich.

Eine Variante dieser Ausführungsform zur der Herstellung der erfindungsgemäßen Dispersionspulver besteht darin, daß die maskierten Polyaldehyde d) vorzugsweise in Form von wäßrigen Lösungen oder in Substanz noch vor dem Trocknungsprozeß der Polyvinylester-Dispersion zugemischt werden. Dieser Vorgang kann vor oder nach Zugabe der Komponenten b) und e) zu einem beliebigen Zeitpunkt erfolgen und ist nicht kritisch. Im Falle einer Sprühtrocknung wird die Trockengastemperatur dann so gewählt, daß die thermische Zersetzungstemperatur der maskierten Polyaldehydverbindungen nicht überschritten wird. Beispielsweise soll die Temperatur des Gasstroms bei Verwendung von Glutaraldehydbis(natriumhydrogensulfit) als einer bevorzugten Verbindung aus der Gruppe d) einen Wert von 120 ° C nicht überschreiten. Nach der Trocknung kann noch die acide Komponente f) der pulverförmigen Zusammensetzung zugemischt werden.

Die erfindungsgemäß hergestellten Dispersionspulver besitzen eine überraschend gute Lagerstabilität und sind gut rieselfähig.

Gegenstand der Erfindung ist weiterhin ein Verfahren zur Herstellung von als wasserresistente Klebstoffe geeigneten Redispersionen aus den erfindungsgemäßen Dispersionspulverzusammensetzungen.

Wird von einem Dispersionspulver ausgegangen, in dem die Komponente f) bereits enthalten ist, liegt nach dem Anrühren mit Wasser unmittelbar eine Redispersion vor, die als Einkomponentenklebstoff eingesetzt werden kann. Die Dispersion weist einen sauren pH-Wert auf, der in einem Bereich liegt, in dem die maskierten Polyaldehyde d) langsam hydrolysiert werden und die Aldehydgruppen zeitlich kontrolliert freigesetzt werden. Dieser pH-Bereich liegt vorzugsweise zwischen 2 und 6, insbesondere zwischen 2,5 und 4.

Ansonsten wird die acide Komponente f) in einem Zweikomponentensystem erst während oder nach der Redispergierung der Pulvermischung, gegebenenfalls mit noch weiteren Säuren, vorzugsweise Brönsted-Säuren wie organischen Säuren oder Mineralsäuren mit pK_{S}-Werten von kleiner als 2,5, der Redispersion der pulverförmigen Klebstoffzusammensetzung zugesetzt. Die Zugabe der Komponente f) erfolgt dann vorzugsweise in Form ihrer wäßrigen Lösung.

Gegenstand dieser Erfindung ist die Verwendung der erfindungsgemäßen Dispersionspulver in Klebstoffen, vorzugsweise in wasserresistenten Klebstoffen.

Die aus den Redispersionen der erfindungsgemäßen Dispersionspulverzusammensetzungen gewonnenen Produkte eignen sich als Klebstoffe insbesondere für die Holzverleimung, wobei bei praxisgerechten Topfzeiten von mindestens 8 Stunden ausgezeichnete Feucht-Bindefestigkeitswerte erzielt werden. Sie genügen damit bei Verwendung als Holzleim gemäß der Prüfnorm DIN EN 204 wenigstens der Beanspruchungsgruppe D2, vorzugsweise D3, insbesondere der Prüfnorm D4. Sie eignen sich damit besonders für die Verwendung in Innenräumen mit extremen Klimaschwankungen und Wassereinwirkung, beispielsweise Hallenbäder und Duschkabinen, sowie für die Außenanwendung mit hohen klimatischen Einflüssen, beispielsweise Fenster und Außentüren. Weiterhin sind sie hervorragend für die Hochfrequenzverleimung verwendbar.

Weitere Anwendungsbeispiele der erfindungsgemäßen pulverförmigen Zusammensetzungen sind wasserfeste Verklebungen von Papier, Pappe, Wellpappe, Schaumstoff, Leder, Textil- oder Preßschichtstoffen, als Fußboden-, Wand- oder Deckenklebstoff oder als Möbelfolien- oder Teppichrückenkleber, Fliesenkleber für nicht säureempfindliche Untergründe, wasserfeste Bindemittel für Holzfaserplatten oder Faserleder sowie Bindemittel für Dämm-Materialien aus Papier- oder Kunststoff-Fasern oder als Binder für Textil und Non-Woven.

Weitere Anwendungsbereiche sind Baustoffe mit anorganischen Bindemitteln. Beispiele sind Gipsbaustoffe, die bei dem sich einstellenden pH-Wert abbindefähig sind.

Die folgenden Beispiele dienen zur Erläuterung der Erfindung. Die in den Beispielen angegebenen Teile und Prozente beziehen sich auf das Gewicht, falls nicht anders vermerkt.

### Beispiele

### Herstellung von pulverförmigen Klebstoffen

### Beispiel 1

100 Teile ®Mowilith-Pulver DS (Polyvinylacetat-Pulver, mit Polyvinylalkohol stabilisiert; Hoechst AG) wurden mit 1 Teil Glutaraldehydbis(natriumhydrogensulfit) und 2,6 Teilen Aluminiumchlorid-Hexahydrat versetzt und in einem Taumelmischer vermischt.

### Beispiel 2

In 100 Teile einer handelsüblichen homopolymeren Polyvinylacetat-Dispersion, die mit ca. 10 % (bezogen auf Polyvinylacetat) teilverseiftem Polyvinylalkohol stabilisiert ist, wurden 2 Teile Butyldiglykolacetat eingerührt. Die Dispersion wurde anschließend auf einen Feststoffgehalt von 37 % verdünnt und mit Hilfe eines Scheibenzerstäubers (Fa. Niro) unter Verwendung von 1 %, bezogen auf den Feststoffanteil, eines handelsüblichen Antibackmittels (hydrophobierte Kieselsäure mit einer Teilchengröße von 10 µ) sprühgetrocknet. Sprühbedingungen: Eintrittstemperatur = 125 °C, Austrittstemperatur = 75 °C, Trockengasdurchsatz = 900 m³/h, Produktdurchsatz = 20 kg/h, Umdrehungsgeschwindigkeit der Zerstäuberscheibe = 23.000 U/min.
100 Teile des auf diese Weise erhaltenen gut rieselfähigen Pulvers wurden anschließend mit 1 Teil Glutaraldehydbis(natriumhydrogensulfit) und 2,6 Teilen Aluminiumchlorid-Hexahydrat versetzt und in einem Taumelmischer vermischt.

### Beispiel 3

74,5 Teile einer handelsüblichen homopolymeren Polyvinylacetat-Dispersion, die mit ca. 10 % (bezogen auf Polyvinylacetat) teilverseiftem Polyvinylalkohol stabilisiert ist, wurden mit Hilfe eines Flügelrührers mit 25,5 Teilen einer mit ca. 10 % bezogen auf die Gesamtmenge an Polymerisat) teilverseiftem Polyvinylalkohol stabilisierten Vinylacetat/Ethylen-Dispersion mit einem Ethylengehalt von 25 % und einer Einfriertemperatur von -10 °C vermischt. Die Dispersion wurde anschließend mithilfe eines Sprühturms unter Verwendung einer rotierenden Zerstäuberscheibe mit den im Beispiel 2 angegebenen Bedingungen sprühgetrocknet.
100 Teile des so erhaltenen gut rieselfähigen Pulvers wurden mit 1 Teil Glutaraldehydbis(natriumhydrogensulfit) und 2,6 Teilen Aluminiumchlorid-Hexahydrat versetzt und in einem Taumelmischer vermischt.

### Beispiel 4

Lagertest:
Die Pulverzusammensetzung des Beispiels 3 wurde 9 Monate bei Raumtemperatur gelagert.

### Herstellung von als Holzleim geeigneten Redispersionen aus den Beispielen 1 bis 4

Die Pulverzusammensetzungen aus den Beispielen 1 bis 4 erwiesen sich als gut redispergierbar und führten zu koagulatfreien Redispersionen. Durch Zumischen von Wasser wurden 50 %ige Redispersionen hergestellt, deren pH-Werte im Bereich zwischen 2,8 und 3,5 lagen. Die MFT (minimale Filmbildetemperatur) bei den Beispielen 2 und 3 betrug 5 ° C beziehungsweise 0°C. Zur Herstellung eines Vergleichsbeispiels wurde aus Mowilith-Pulver DS ohne weitere Zusätze eine 30 %ige Redispersion hergestellt. (Vergleichsbeispiel V1)

### Anwendungstechnische Prüfung der Redispersionen als Holzklebstoff

Die holzleimtechnische Prüfung erfolgte in Anlehnung an DIN EN 204/D4. Die Herstellung der Prüflinge erfolgt nach der Vorgehensweise der DIN EN 205. Die Verleimung und Prüfung wird unter Berücksichtigung folgender Kenndaten durchgeführt:

| | |
|---|---|
| Leimauftrag | 150 ± 20 g/m² beidseitiger Auftrag |
| Offene Wartezeit | 3 Minuten |
| Geschlossene Wartezeit | 3 Minuten |
| Preßzeit | 2 Stunden |
| Preßdruck | 0,7 ± 0,1 N/mm² |
| Anzahl Prüfkörper pro Prüffolge | 20 |
| Lagerungsfolge D4/5 | 7 Tage Normalklima^{*)} |
| | 6 Stunden in kochendem Wasser |
| | 2 Stunden in kaltem Wasser |
| Prüftemperatur | 23 °C ± 2 °C |
| Vorschubgeschwindigkeit | 50 mm/Min. |

Die Einordnung in die Beanspruchungsgruppe D4/5 erfolgt bei einer Reißfestigkeit von > 4 N/mm².

Normalklima:^{*)}23 ± 2 °C und 50 ± 5 % relative Luftfeuchte

In der Tabelle 1 sind die Naßklebfestigkeiten nach DIN EN 204/D4 aufgelistet. Dort finden sich ebenfalls die bei 23 °C gemessenen Viskositäten (Brookfield RVT, Spindel 6, 20 U/Min.) der erhaltenen Redispersionen sowie deren Viskositäten nach Ablauf einer Zeitspanne von 8 Stunden.

**Tabelle 1**

| Anwendungstechnische Prüfdaten der Redispersionen der Beispiele 1 bis 4 und V1 | | | |
|---|---|---|---|
| Beispiel | Viskosität [Pa·s] | Viskosität [Pa·s] nach 8 Stunden | D4/5 [N/mm²] |
| 1 | 12,1 | 14 | 4,8 |
| 2 | 20,5 | 24,0 | 7,2 |
| 3 | 19,3 | 17,9 | 6,2 |
| 4 | 30 | 35 | 4,1 |
| V1 | 11,2 | 12 | alle Prüfkörper auseinandergefallen |

Aus dieser Tabelle wird deutlich, daß nur die Beispiele 1 bis 4 zu kochwasserbeständigen Klebverbindungen mit Erfüllung der Prüfnorm D4/5 führen, wohingegen das Vergleichsbeispiel V1 ohne die Verwendung der erfindungsgemäßen Komponenten d) und f) keinerlei Wasserresistenz aufweist.

## Patentansprüche

1. Redispergierbares Dispersionspulver, enthaltend
a) ein Basispolymerisat aus der Gruppe der Vinylester-Homo- und Copolymerisate,
b) 2 bis 20 Gew.-%, bezogen auf die Gesamtmasse des Basispolymerisats a), Polyvinylalkohol mit einem Hydrolysegrad von 70 bis 100 Mol-% und einer Viskosität der 4%igen wäßrigen Lösung von 2 bis 70 mPa·s,
c) 0 bis 50 Gew.-%, bezogen auf die Gesamtmasse der Polymeranteile a) und b), Antibackmittel,
d) 0,001 bis 5 Gew.-%, bezogen auf die Gesamtmasse der Polymeranteile a) und b), wasserlösliche, mindestens bifunktionelle, maskierte Aldehyde mit wenigstens 3 Kohlenstoffatomen, aus denen im sauren Medium Aldehydgruppen kontrolliert freisetzbar sind,
e) 0 bis 25 Gew.-%, bezogen auf die Gesamtmasse des Basispolymerisats a), weitere Additive aus der Gruppe der Filmbildehilfsmittel und Weichmacher,
f) 0 bis 10 Gew.-%, bezogen auf die Gesamtmasse der Polymeranteile a) und b), in Festsubstanz vorliegende oder auf einem Trägermaterial adsorbierte freie Brönsted- oder Lewis-Säuren.

2. Redispergierbares Dispersionspulver nach Anspruch 1, dadurch gekennzeichnet, daß als Basispolymerisat a) ein Homo- oder Copolymer mit einem Vinylester-Anteil von mindestens 50 Gew.-% enthalten ist.

3. Redispergierbares Dispersionspulver nach Anspruch 1, dadurch gekennzeichnet, daß als Basispolymerisat a) ein Vinylacetat-Homopolymerisat enthalten ist.

4. Redispergierbares Dispersionspulver nach Anspruch 1, dadurch gekennzeichnet, daß 0,1 bis 0,5 Gew.-%, bezogen auf die Polymeranteile a) und b), maskierte Aldehyde d) enthalten sind.

5. Redispergierbares Dispersionspulver nach Anspruch 1, dadurch gekennzeichnet, daß als maskierte Aldehyde d) Derivate von Glutaraldehyd und Succinaldehyd enthalten sind.

6. Redispergierbares Dispersionspulver nach Anspruch 1, dadurch gekennzeichnet, daß als maskierte Aldehyde d) Glutaraldehydbis(natriumhydrogensulfit) oder Succinaldehydbis(natriumhydogensulfit) enthalten sind.

7. Redispergierbares Dispersionspulver nach Anspruch 1, dadurch gekennzeichnet, daß 0,1 bis 5 Gew.-% Säure f), bezogen auf die Gesamtmasse des Polymeranteils a) und b), enthalten sind.

8. Redispergierbares Dispersionspulver nach Anspruch 1, dadurch gekennzeichnet, daß die Säure f) ausgewählt ist aus der Gruppe meta-Phosphorsäure, acide kristalline Salze der ortho-Phosphorsäure, Aluminiumchlorid, Aluminiumnitrat, Zirkonoxychlorid und Eisen(III)chlorid.

9. Verfahren zur Herstellung von redispergierbaren Dispersionspulvern nach Anspruch 1, ausgehend von einer das Basispolymerisat a) enthaltenden Dispersion, die bereits mit einem Teil des einzusetzenden Polyvinylalkohols b) stabilisiert sein kann und versetzt wird mit der Restmenge des einzusetzenden Polyvinylalkohols b) und gegebenenfalls versetzt wird mit einer oder mehreren Komponenten e), durch Trocknen unter optionalem Zusatz von Antibackmittel c) und anschließende Zugabe der maskierten Polyaldehyde d) und gegebenenfalls der Säure f).

10. Verfahren zur Herstellung der redispergierbaren Dispersionspulver nach Anspruch 9, dadurch gekennzeichnet, daß die maskierten Aldehyde d) in Form von wäßrigen Lösungen oder in Substanz noch vor dem Trocknungsprozeß der Polyvinylester-Dispersion zugemischt werden und die Temperatur beim Trocknen der Zersetzungstemperatur der maskierten Aldehyde d) nicht überschreitet.

11. Verfahren zur Herstellung einer stabilen Redispersion aus dem Dispersionspulver nach Anspruch 7 durch Anrühren des Dispersionspulvers mit Wasser.

12. Verfahren zur Herstellung einer stabilen Redispersion aus dem Dispersionspulver nach Anspruch 1 durch Anrühren des Dispersionspulvers mit Wasser und Zugabe der Säure f) während oder nach dem Redispergieren des Dispersionspulvers.

13. Verwendung des redispergierbaren Dispersionspulvers nach Anspruch 1 in Klebstoffen.

14. Verwendung des redispergierbaren Dispersionspulvers nach Anspruch 1 zusammen mit anorganischen Bindemitteln in Baustoffen.

## Claims

1. A redispersible dispersion powder comprising
a) a base polymer from the group consisting of vinyl ester homo- and copolymers,
b) from 2 to 20% by weight, based on the overall mass of the base polymer a), of polyvinyl alcohol having a degree of hydrolysis of from 70 to 100 mol-% and a viscosity of the 4% aqueous solution of from 2 to 70 mPa·s,
c) from 0 to 50% by weight, based on the overall mass of the polymer components a) and b), of anticaking agent,
d) from 0.001 to 5% by weight, based on the overall mass of the polymer components a) and b), of water- soluble, at least bifunctional, masked aldehydes having at least 3 carbon atoms, from which it is possible to bring about controlled release of aldehyde groups in an acidic medium,
e) from 0 to 25% by weight, based on the overall mass of the base polymer a), of further additives from the group consisting of film-forming auxiliaries and plasticizers,
f) from 0 to 10% by weight, based on the overall mass of the polymer components a) and b), of free Brönsted or Lewis acids which are present as solids or adsorbed on a carrier material.

2. A redispersible dispersion powder as claimed in claim 1, wherein the base polymer a) present is a homo- or copolymer having a vinyl ester fraction of at least 50% by weight.

3. A redispersible dispersion powder as claimed in claim 1, wherein the base polymer a) present is a vinyl acetate homopolymer.

4. A redispersible dispersion powder as claimed in claim 1, which contains from 0.1 to 0.5% by weight, based on the polymer components a) and b), of masked aldehydes d).

5. A redispersible dispersion powder as claimed in claim 1, wherein masked aldehydes d) present are derivatives of glutaraldehyde and succinaldehyde.

6. A redispersible dispersion powder as claimed in claim 1, wherein masked aldehydes d) present are glutaraldehyde bis(sodium hydrogen sulfite) or succinaldehyde bis(sodium hydrogen sulfite).

7. A redispersible dispersion powder as claimed in claim 1, which contains from 0.1 to 5% by weight of acid f), based on the overall mass of the polymer component a) and b).

8. A redispersible dispersion powder as claimed in claim 1, wherein the acid f) is selected from the group consisting of meta-phosphoric acid, acidic crystalline salts of ortho-phosphoric acid, aluminum chloride, aluminum nitrate, zirconium oxychloride and iron(III) chloride.

9. A process for preparing a redispersible dispersion powder as claimed in claim 1, starting from a dispersion which comprises the base polymer a) and which may have already been stabilized with some of the polyvinyl alcohol b) to be employed, and to which is added the remainder of the polyvinyl alcohol b) to be employed and, if desired, also one or more components e), by drying with the optional addition of anticaking agent c) and subsequently adding the masked polyaldehydes d) and, if desired, the acid f).

10. A process for preparing a redispersible dispersion powder, as claimed in claim 9, which comprises admixing the masked aldehydes d) in the form of aqueous solutions or as solids to the polyvinyl ester dispersion even prior to the drying process and wherein the temperature in the course of drying does not exceed the decomposition temperature of the masked aldehydes d).

11. A process for preparing a stable redispersion from a dispersion powder as claimed in claim 7, by stirring the dispersion powder with water.

12. A process for preparing a stable redispersion from a dispersion powder as claimed in claim 1, by stirring the dispersion powder with water and adding the acid f) during or after the redispersion of the dispersion powder.

13. The use of a redispersible dispersion powder as claimed in claim 1 in adhesives.

14. The use of a redispersible dispersion powder as claimed in claim 1, together with inorganic binders, in construction materials.

## Revendications

1. Poudre de dispersion redispersible, contenant
a) un polymère de base choisi parmi les homo- et les copolymères d'ester de vinyle,
b) 2 à 20% en masse par rapport à la masse totale du polymère de base a), d'alcool polyvinylique ayant un degré d'hydrolyse de 70 à 100% en mole et une viscosité de la solution aqueuse à 4% de 2 à 70 mPa·s,
c) 0 à 50% en masse, par rapport à la masse totale des parties polymère a) et b), d'agents anti-agglomération,
d) 0,001 à 5% en masse, par rapport à la masse totale des parties polymère a) et b), d'aldéhydes hydrosolubles, au moins bifonctionnels, masqués ayant au moins 3 atomes de carbone, à partir desquels on peut libérer de manière contrôlée des groupes aldéhyde en milieu acide,
e) 0 à 25% en masse, par rapport à la masse totale du polymère de base a), d'autres additifs choisis entre les adjuvants filmogènes et les plastifiants;
f) 0 à 10% en masse, par rapport à la masse totale des parties polymères a) et b), d'acides libres de Brônsted ou de Lewis se présentant sous forme de substance solide ou adsorbés sur un matériau support.

2. Poudre de dispersion redispersible selon la revendication 1, caractérisée en ce qu'elle contient comme polymère de base a) un homo- ou copolymère ayant une teneur en ester de vinyle d'au moins 50% en poids.

3. Poudre de dispersion redispersible selon la revendication 1, caractérisée en ce qu'elle contient comme polymère de base a) un homopolymère d'acétate de vinyle.

4. Poudre de dispersion redispersible selon la revendication 1, caractérisée en ce qu'elle contient de 0,1 à 0,5% en poids, par rapport à la teneur en polymères a) et b), d'aldéhydes masqués d).

5. Poudre de dispersion redispersible selon la revendication 1, caractérisée en ce qu'elle contient comme aldéhydes masqués d) des dérivés du glutaraldéhyde et du succinaldéhyde.

6. Poudre de dispersion redispersible selon la revendication 1, caractérisée en ce qu'elle contient comme aldéhydes masqués d) le glutaraldéhydbis(hydrogénosulfite de sodium) ou le succinaldéhydbis(hydrogénosulfite de sodium).

7. Poudre de dispersion redispersible selon la revendication 1, caractérisée en ce qu'elle contient de 0,1 à 5% en masse d'acide f), par rapport à la masse totale de la partie polymère a) et b).

8. Poudre de dispersion redispersible selon la revendication 1, caractérisée en ce l'acide f) est choisi parmi l'acide métaphosphorique, les sels cristallins de l'acide orthophosphorique, le chlorure d'aluminium, le nitrate d'aluminium, l'oxychlorure de zinc et le chlorure de fer (III).

9. Procédé pour la préparation de poudres de dispersion redispersibles selon la revendication 1, en partant d'une dispersion contenant le polymère de base a), qui peut être déjà stabilisée avec une partie de l'alcool polyvinylique à utiliser b) et à laquelle on ajoute la quantité restante de l'alcool polyvinylique à utiliser b) et à laquelle on ajoute éventuellement un ou plusieurs composants e), par séchage en ajoutant éventuellement des agents anti-agglomération c) et en ajoutant ensuite les polyaldéhydes masqués d) et éventuellement l'acide f).

10. Procédé pour la préparation des poudres de dispersion redispersibles selon la revendication 9, caractérisé en ce que, l'on ajoute au mélange les aldéhydes masqués c) sous la forme de solutions aqueuses ou sous forme solide encore avant le procédé de séchage de la dispersion de polyester de vinyle et en ce que la température pendant le séchage ne dépasse pas la température de décomposition des aldéhydes masqués d).

11. Procédé pour la préparation d'une redispersion stable à partir de la poudre de dispersion selon la revendication 7 par mélange sous agitation de la poudre de dispersion avec de l'eau.

12. Procédé pour la préparation d'une redispersion stable à partir de la poudre de dispersion selon la revendication 1 par mélange sous agitation de la poudre de dispersion avec de l'eau et addition de l'acide f) pendant ou après la redispersion de la poudre de dispersion.

13. Utilisation de la poudre de dispersion redispersable selon la revendication 1 dans des colles.

14. Utilisation de la poudre de dispersion redispersable selon la revendication 1 en même temps que des liants organiques dans des matériaux de construction.
